# EUROPEAN PATENT APPLICATION

(11) **EP 4 391 713 A1**
(43) Date of publication of application: **26.06.2024**
(21) Application number: 21960184.6
(22) Date of filing: 12.10.2021
(51) Int. Cl.: H04W 88/04, H04W 40/22, H04L 5/00

(54) **DATA TRANSMISSION METHOD AND APPARATUS, EQUIPMENT, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); ZHANG, Boyuan, Dongguan, Guangdong 523860 (CN)
(74) Representative: Ipside
(86) International application number: PCT/CN2021/123290
(87) International publication number: WO 2023/060435

(57) **Abstract**

A data transmission method and apparatus, a device, and a storage medium are provided. A first user equipment (UE) sends first data according to configuration information, where the first data includes data to be sent to a third UE which is of the first UE itself, or is received from a network device by the first UE, or is received from a second UE by the first UE, and/or data to be sent to the network device which is received from the second UE by the first UE; the configuration information indicates a radio link control (RLC) channel to be used by the first UE for sending the first data. With the method, a scheme for configuring an RLC channel to be used by the first UE for sending the first data in a relay communication system can be provided. As such, before sending the first data, the first UE can determine the RLC channel to be used for sending the first data, such that the first UE can use the RLC channel to send the first data, thereby improving reliability in sending the first data.

## Description

### TECHNICAL FIELD

The disclosure relates to the field of communication, and more particularly, to a data transmission method and apparatus, a device, and a storage medium.

### BACKGROUND

With development of the field of communication technology, a user equipment (UE) can not only establish a communication connection directly with a network device, but can also establish a communication connection with the network device through relay of other UEs in a relay communication system. The UE relaying in the relay communication system may be referred to as a relay UE, and a device that accesses a network via the relay UE may be referred to as a remote UE.

Taking an uplink relay service as an example, the relay UE can map different uplink bearers for the same remote UE and/or different remote UEs onto a radio link control (RLC) channel(s) for the relay UE. However, the specific scheme for the relay UE to map data for each bearer onto the RLC channel for the relay UE is not yet specified.

### SUMMARY

Embodiments of the disclosure provide a data transmission method and apparatus, a device, and a storage medium, which can xx.

In a first aspect, a data transmission method includes the following. A first user equipment (UE) sends first data according to configuration information, where the first data includes data to be sent to a third UE which is of the first UE itself, or is received from a network device by the first UE, or is received from a second UE by the first UE, and/or data to be sent to the network device which is received from the second UE by the first UE; the configuration information indicates a radio link control (RLC) channel to be used by the first UE for sending the first data.

In a second aspect, a data transmission apparatus is applied to a first UE, and includes a transmitting module. The transmitting module is configured to send first data according to configuration information, where the first data includes data to be sent to a third UE which is of the first UE itself, or is received from a network device by the first UE, or is received from a second UE by the first UE, and/or data to be sent to the network device which is received from the second UE by the first UE; the configuration information indicates an RLC channel to be used by the first UE for sending the first data.

In a third aspect, a UE includes a transceiver, a memory, and a processor. The memory is configured to store computer programs. The processor is configured to execute the computer programs in cooperation with the transceiver, to implement the steps of the data transmission method in the first aspect.

In a fourth aspect, a computer-readable storage medium is configured to store computer programs which, when executed by a processor, implement the steps of the data transmission method in the first aspect.

In the data transmission method and apparatus, the device, and the storage medium. The first UE sends the first data according to the configuration information, where the first data includes data to be sent to the third UE which is of the first UE itself, or is received from the network device by the first UE, or is received from the second UE by the first UE, and/or data to be sent to the network device which is received from the second UE by the first UE; and the configuration information indicates the RLC channel to be used by the first UE for sending the first data. Since the configuration information can indicate the RLC channel to be used by the first UE for sending the first data, a scheme for configuring an RLC channel for sending first data in a relay communication system is thus provided. As such, before sending the first data, the first UE can determine the RLC channel to be used for sending the first data, such that the first UE can use the RLC channel to send the first data, which is possible to improve reliability in sending the first data.

### BRIEF DESCRIPTION OF THE DRAWINGS

In order to describe more clearly technical solutions of embodiments of the disclosure or the related art, the following will give a brief introduction to the accompanying drawings used for describing embodiments or the related art. Apparently, the accompanying drawings described below are merely some embodiments of the disclosure. Based on these drawings, those of ordinary skill in the art can also obtain other drawings without creative effort.
FIG. 1 is a diagram illustrating an application environment of a data transmission method according to an embodiment.
FIG. 2 is a schematic diagram illustrating a communication connection in a data transmission method according to an embodiment.
FIG. 3 is a schematic flowchart of a data transmission method according to an embodiment.
FIG. 4 is a diagram of a data transmission method according to an embodiment.
FIG. 5 is a schematic flowchart of a data transmission method according to an embodiment.
FIG. 6 is a schematic diagram illustrating a communication connection in a data transmission method according to an embodiment.
FIG. 7 is a schematic diagram illustrating a communication connection in a data transmission method according to an embodiment.
FIG. 8 is a schematic diagram illustrating a communication connection in a data transmission method in an embodiment.
FIG. 9 is a schematic diagram illustrating a communication connection in a data transmission method according to an embodiment.
FIG. 10 is a structural block diagram of a data transmission apparatus according to an embodiment.
FIG. 11 is a structural block diagram of a data transmission apparatus according to an embodiment.
FIG. 12 is a structural block diagram of a data transmission apparatus according to an embodiment.
FIG. 13 is a structural block diagram of a user equipment (UE) according to an embodiment.

### DETAILED DESCRIPTION

To make the objectives, technical solutions, and advantages of the disclosure clearer and more comprehensible, the following will describe the disclosure in further detail with reference to the accompanying drawings and embodiments. It should be understood that, the embodiments described herein are merely intended for explaining the disclosure, rather than limiting the disclosure.

In proximity based service (ProSe) in release 13 (Rel-13), a layer 3 (L3) user equipment (UE)-to-network relay function is introduced by the 3^{rd} generation partnership project ("3GPP" for short), that is, a remote UE may access a network via a relay UE, and the remote UE is connected with the relay UE over a sidelink.

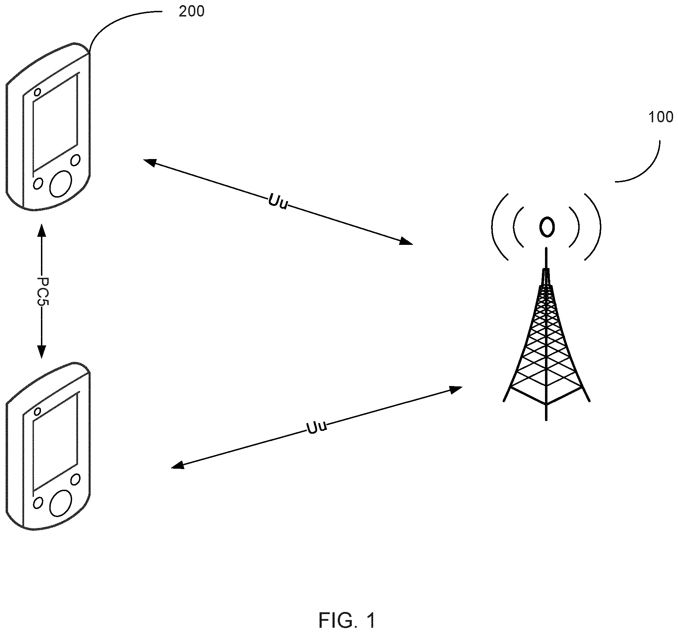

A data transmission method provided in embodiments of the disclosure can be applied to the field of communication technology. FIG. 1 is a schematic diagram illustrating an application scenario of the data transmission method provided in embodiments of the disclosure. A communication system may include at least one network device 100 and multiple UEs 200. The UEs 200 each can communicate with the network device 100, for example, perform uplink or downlink communication. Alternatively, one of the UEs 200 may access a network via other UE(s). The UE 200 may access the network via one or more other UEs, and different UEs 200 may communicate with each other through sidelink communication over ProSe communication interface 5 (PC5).

The network device 100 may be any device having wireless transceiver functions, and includes but is not limited to: a NodeB, an evolutional NodeB (eNodeB), a base station in a fifth generation (5G) communication system, a base station or network device in a future communication system, an access node in a wireless fidelity (WiFi) system, a wireless relay node, a wireless backhaul node, etc. The network device 100 may also be a radio controller in a cloud radio access network (CRAN) scenario. The network device 100 may also be a small base station, a transmission reception point (TRP), a road side unit (RSU), etc. There is no limitation on the technology and device form adopted by the network device 100 in embodiments of the disclosure.

The UE 200 may be a device having wireless transceiver functions, and may be but is not limited to: a handheld device, a wearable device, or an in-vehicle device, etc. The UE 200 may be a mobile phone, a pad, a computer with wireless transceiver functions, a virtual reality (VR) terminal device, an augmented reality (AR) terminal device, a wireless terminal in industrial control, a wireless terminal in self-driving, a wireless terminal in remote medicine, a wireless terminal in smart grid, a wireless terminal in transportation safety, a wireless terminal in smart city, a wireless terminal in smart home, etc. There is no limitation on the application scenario in embodiments of the disclosure.

In the foregoing communication system, if one of the UEs accesses the network via another UE, the UE for relaying in the communication system may be referred to as a relay UE, and the UE accessing the network via the relay UE may be referred to as a remote UE. In an uplink transmission direction, when the remote UE has data that is to be sent to the network device, the remote UE can send the data to the relay UE, and then the relay UE receives the data and sends the data to the network device over an uplink of a UE-universal mobile telecommunication system (UMTS) terrestrial radio access network (UE-UTRAN, Uu) interface. In a downlink transmission direction, the network device can send data to the relay UE over a downlink of a Uu interface, and then the relay UE sends the data to the remote UE over a sidelink.

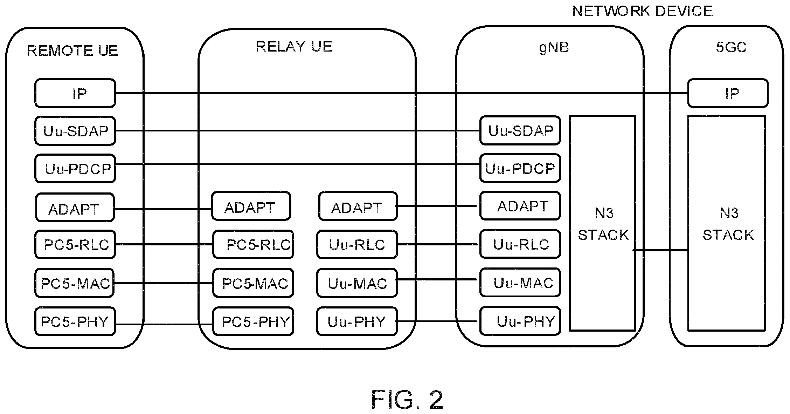

As illustrated in FIG. 2, the remote UE and the network device have a packet data convergence protocol ("PDCP" for short) protocol stack for a Uu interface, where the PDCP protocol stack for the Uu interface has several radio bearers ("RBs" for short) for transmitting data of the remote UE. In addition, an adaptation layer (also referred to as "ADAPT" for short) is placed below the PDCP protocol stack for the Uu interface for the remote UE. The adaptation layer can be used to add a packet header to data of the remote UE, where the packet header contains an identity (ID) of the remote UE, add an ID of an RB (that is, RBID) for the remote UE to data, identify data of the remote UE and data of the relay UE; identify data of different remote UEs, and identify data from different RBs for the remote UE, such that the network device can differentiate data of different remote UEs, and then send these data to different core network gateways and servers in order for subsequent processing. Below the adaptation protocol layer is a PC5 radio protocol stack, where the PC5 radio protocol stack includes a radio link control (RLC) layer, a media access control (MAC) layer, and a physical (PHY) layer. The PC5 interface is an interface for sidelink communication between the remote UE and the relay UE.

The relay UE and the network device have a PDCP protocol stack for a Uu interface, where the PDCP protocol stack for the Uu interface for the relay UE may have several RBs for transmitting data of the remote UE. An adaptation layer is placed below the PDCP protocol stack, where the adaptation layer may be used to relay data of the remote UE. Since the relay UE itself also has data that is to be transmitted, the adaptation layer can be used to identify data of the relay UE and data of the remote UE, identify data of different remote UEs, and identify data from different RBs for the remote UE. Below the adaptation protocol layer are an RLC layer, a MAC layer, and a PHY layer for the Uu interface.

Taking an uplink transmission direction as an example, after receiving uplink data, the relay UE can map data from several RBs at the adaptation layer for the relay UE onto different interfaces for the RLC layer for the Uu interface, that is, onto different Uu RLC channels, then process the uplink data via the RLC layer, the MAC layer, and the PHY layer, and then send the uplink data to the network device. However, the specific mapping mode is not yet specified in a current protocol.

With regard to the foregoing problems, embodiments of the disclosure provide a data transmission method, which can solve the problem that a UE cannot explicitly determine an RLC channel corresponding to data to be sent before sending the data.

It should be noted that, with the data transmission method in the disclosure, in addition to solving the foregoing technical problems, other technical problems can also be solved, which is not limited in the disclosure.

The technical solutions of the disclosure will be described in detail below with reference to embodiments. The following embodiments may be combined with each other, and the same or similar concepts or processes may not be elaborated again in some embodiments.

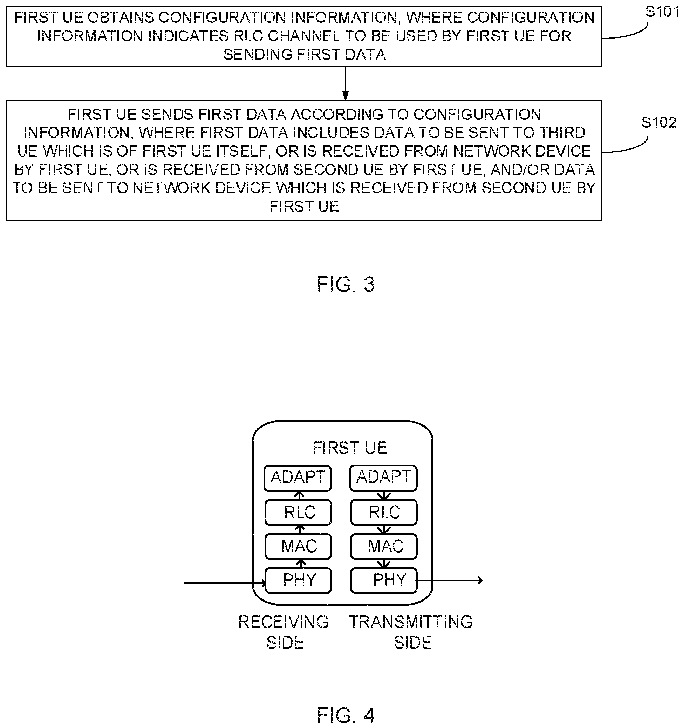

FIG. 3 is a flowchart of a data transmission method according to an embodiment. The data transmission method in the embodiments is will be described by taking the UE illustrated in FIG. 1 as an example. As illustrated in FIG. 3, the method includes the following steps.

S101, a first UE obtains configuration information, where the configuration information indicates an RLC channel to be used by the first UE for sending first data.

The first UE may determine, based on the configuration information, the RLC channel to be used for sending the first data.

The RLC channel may be an interface for the first UE to receive data via an RLC layer. Each RLC entity at the RLC layer for the first UE may correspond to one RLC channel. The RLC layer for the first UE may correspond to multiple RLC channels, where the number (that is, quantity) of the RLC channels may be four, or eight, or other numbers, which is not limited herein. The RLC channel may be an RLC channel for a Uu interface, that is, an RLC channel to be used by the first UE for sending the first data to a network device. Alternatively, the RLC channel may be an RLC channel for a PC5 interface, that is, an RLC channel to be used by the first UE for sending the first data to other UEs.

The configuration information may indicate a manner for determining an RLC channel corresponding to the first data. The manner for determining may include determining randomly the RLC channel corresponding to the first data. For example, before sending the first data, the first UE may select an available RLC channel randomly from multiple RLC channels. Alternatively, the manner for determining may include selecting a corresponding RLC channel according to an order of RLC channels. For example, before sending the first data, the first UE may determine an *N*^{*t*h} RLC channel used for sending data last time, and then take an (*N*+1)^{th} RLC channel or an (*N*-1)^{th} RLC channel as an RLC channel currently to be used for sending the first data. The indication manner of the configuration information is not limited herein. Optionally, the configuration information may be used for explicitly determining, according to the first data, which RLC channel corresponds to the first data. For example, if a value of a preset field in the first data is A, an RLC channel corresponding to field A may be determined as the RLC channel to be used for sending the first data.

The configuration information may be information preset for the first UE, for example, the first UE may set the configuration information according to protocol specification. Optionally, the first UE may receive the configuration information sent by the network device. When receiving the configuration information sent by the network device, the first UE may receive the configuration information through a reconfiguration message, or may receive the configuration information through other messages, which is not limited herein.

The first UE may obtain configuration information corresponding to a node type when at different nodes in a relay communication system. For example, if the first UE is a relay UE, the first UE may obtain first configuration information corresponding to the relay UE. If the first UE is a remote UE in the relay communication system, the first UE may obtain second configuration information corresponding to the remote UE. In another implementation, the configuration information may include configuration data corresponding to different node types, and the first UE may determine, according to the node type in the relay communication system, configuration data corresponding to the node type in the configuration information obtained.

If the first UE is capable of sending the first data of different data types, the configuration information used may be the same or different. For example, the data type may be service data, or may include signaling data, and the first UE may obtain third configuration information corresponding to the service data or fourth configuration information corresponding to the signaling data. Optionally, configuration information corresponding to different data types may be obtained in the same manner or in different manners.

S102, the first UE sends first data according to the configuration information, where the first data includes data to be sent to a third UE which is of the first UE itself, or is received from the network device by the first UE, or is received from a second UE by the first UE, and/or data to be sent to the network device which is received from the second UE by the first UE.

The first data may be data to be sent to the third UE by the first UE in a relay communication system. The data may include data to be sent to the third UE which is of the first UE itself, or is received from the network device by the first UE, or is received from the second UE by the first UE. The first UE may send data of the first UE itself to the third UE, and then send the data to the network device via the third UE. Alternatively, the first UE may receive data sent by the network device, and then send the first data to the third UE. Alternatively, the first UE may receive the first data from the second UE, and then send the first data to the third UE. The first UE may directly send the first data to the third UE, or may send the first data to the third UE through relay of other UEs, which is not limited herein.

The first data may also be data to be sent to the network device by the first UE in the relay communication system. The first data may be data which is received from the second UE by the first UE and to be sent to the network device.

The first UE may determine, according to the configuration information, the RLC channel to be used for sending the first data, and then send the first data by using the RLC channel. If an adaptation layer is set for the first UE, the adaptation layer may be set above an RLC layer, the RLC channel may be a data transmission channel for transferring data from the adaptation layer to the RLC layer, and the first UE may determine, via the adaptation layer, the RLC channel to be used for sending the first data. In another implementation, the first UE may determine, via a PDCP layer, the RLC channel to be used for sending the first data, where the RLC channel may be a data transmission channel for sending data from the PDCP layer to the RLC layer.

The first UE may map different data of the same UE onto the same RLC channel, or may map different data of the same UE onto different RLC channels. The first UE may map the first data of different UEs onto different RLC channels, or may map the first data of different UEs onto the same RLC channel, which is not limited herein.

After determining the RLC channel to be used for sending the first data, the first UE may send the first data to the RLC layer for the first UE on the RLC channel via the adaptation layer or the PDCP layer, and then process the first data via the RLC layer, a MAC layer, and a PHY layer and then send the first data. The RLC layer can be used for segmenting, re-segmenting, and retransmitting the first data. The MAC layer can be used for completing mapping between a logical channel and a transport channel for the first data, as well as multiplexing and demultiplexing of the first data, and performing air-interface scheduling, and the like. The PHY layer can be used for performing lower-layer encoding and decoding on the first data.

In the foregoing method, the first UE sends the first data according to the configuration information, where the first data includes data to be sent to the third UE which is of the first UE itself, or is received from the network device by the first UE, or is received from the second UE by the first UE, and/or data to be sent to the network device which is received from the second UE by the first UE; and the configuration information indicates the RLC channel to be used by the first UE for sending the first data. Since the configuration information can indicate the RLC channel to be used by the first UE for sending the first data, a scheme for configuring an RLC channel for sending first data in a relay communication system is thus provided. As such, before sending the first data, the first UE can determine the RLC channel to be used for sending the first data, such that the first UE can use the RLC channel to send the first data, which is possible to improve reliability in sending the first data.

In an embodiment, the configuration information may include a correspondence between RLC channels and ID information of the first data. The ID information may be used for identifying which UE the first data belongs to, or may be used for identifying which bearer the first data is sent on. Alternatively, the ID information may be used for identifying which UE the first data is received from or which UE the first data is to be sent to, which is not limited herein. The configuration information may include a correspondence between the ID information of one type and RLC channels, or may include a correspondence between the ID information of multiple types and RLC channels, which is not limited herein.

In an implementation, the ID information of the first data may include a device ID of the second UE and/or a device ID of the third UE. The device ID can uniquely identify a UE. The device ID may be a temporary identifier of a UE such as a subscription concealed identifier ("SUCI" for short), or may be an international mobile equipment identity ("IMEI" for short) of a UE, and the type of the device ID is not limited herein. Optionally, the device ID includes at least one of the following of a UE: 5G system architecture evolution temporary mobile subscriber identity (5G-S-TMSI), an inactive radio network temporary identifier (I-RNTI), a layer 2 identifier (L2 ID), an ID to be used at the adaptation layer for the first UE, or sequence information in a sidelink UE information (SUI) message.

The 5G-S-TMSI may be a simplified form of a 5G globally unique temporary identity (referred to as "5G-GUTI"), and the 5G-GUTI may be allocated to a UE by an access and mobility management function (referred to as "AMF") module in a core network. The I-RNTI may be an identifier in an RNTI, the RNTI may be allocated to a UE by a radio side, and the I-RNTI may be an RNTI carried in a paging message. The L2 ID may be an identifier allocated to the second UE or the third UE by the first UE via L2, where L2 may include an RLC layer, a MAC layer, and a PHY layer. The ID to be used at the adaptation layer for the first UE may be an identifier corresponding to the second UE or the third UE at the adaptation layer for the first UE.

In an implementation, the ID information of the first data may include an ID of a bearer carrying the first data. The bearer may be a data transmission channel for transmitting the first data. Each UE may establish one or more bearers, and different UEs correspond to different bearers. A bearer between a UE and the network device may be referred to as an RB, where the RB may be categorized into a signaling RB ("SRB" for short) and a data RB ("DRB" for short) according to different contents carried thereon. The SRB may be used for carrying signaling data, and may be categorized into SRB0, SRB1, and SRB2 according to different signaling carried thereon, where SRB0 carries radio resource control (RRC) signaling before RRC connection establishment, RB1 carries RRC signaling and non-access stratum ("NAS" for short) signaling before SRB2 establishment, and SRB2 carries NAS signaling. The DRB may be used for carrying user plane data, and a UE can establish multiple DRBs simultaneously.

If the bearer on which the first data is located has different types, the configuration information corresponding to the first data may be obtained in different manners. If the bearer carrying the first data is SRB0 and/or SRB1, the configuration information may be configuration information predefined in a protocol. If the bearer carrying the first data is SRB2 or a DRB, the configuration information may be information received from the network device by the first UE.

In an implementation, the ID information of the first data may include an ID related to an RLC channel to be used by the first UE for receiving the first data. When receiving the first data, the first UE may process the data sequentially via a PHY layer, a MAC layer, and an RLC layer at a receiving side, and then send the first data to an adaptation layer or a PDCP layer by using an RLC channel between the RLC layer and the adaptation layer or the PDCP layer at the receiving side. When sending the first data, the first UE may determine an RLC channel for a transmitting side according to an ID related to an RLC channel for the receiving side to receive the first data, as illustrated in FIG. 4. The ID related to the RLC channel to be used for receiving the first data may be an ID of an RLC bearer (that is, RLC bearer ID) to be used for receiving the first data, and a logical channel identifier ("LCID" for short) corresponding to the RLC channel to be used for receiving the first data. The RLC bearer ID may be in one-to-one correspondence with the RLC channel for the receiving side. A logical channel for the first UE may refer to a data transmission channel between an RLC layer and an MAC layer. An RLC channel corresponding to an RLC layer may be in one-to-one correspondence with a logical channel. The RLC channel to be used for receiving the first data may be determined according to an LCID of a logical channel to be used for receiving the first data.

It should be noted that, the configuration information in embodiments of the disclosure may be a correspondence between the ID information of one type and RLC channels, or may be a correspondence between the ID information of multiple types and RLC channels, which is not limited herein. The ID information of multiple types may be any combination of the device ID, the ID of the bearer carrying the first data, and the ID of the RLC channel to be used for receiving the first data.

The ID information in the configuration information is exemplarily a 5G-S-TMSI, and the configuration information may be represented as shown in the following table. TMSIs 1-4 may be used for identifying different UEs, and RLC channels 1-3 each may represent an RLC channel for the transmitting side for the first UE. Different ID information may correspond to the same RLC channel.

| ID information | RLC channel |
|---|---|
| TMSI 1 | RLC channel 1 |
| TMSI 2 | RLC channel 1 |
| TMSI 3 | RLC channel 2 |
| TMSI 4 | RLC channel 3 |

The ID information in the configuration information exemplarily includes a 5G-S-TMSI and the bearer carrying the first data, and the configuration information may be represented as shown in the following table. TMSIs 1-2 may be used for identifying different UEs, bearers 1-4 may be used for identifying different RBs, and RLC channels 1-2 each may represent an RLC channel for the transmitting side for the first UE. Data transmitted by the same UE on different bearers may correspond to different RLC channels, or may correspond to the same RLC channel. Data transmitted by different UEs on different bearers may correspond to different RLC channels, or may correspond to the same RLC channel.

| ID information | | RLC channel |
|---|---|---|
| TMSI 1 | Bearer 1 | RLC channel 1 |
| | Bearer 2 | RLC channel 2 |
| TMSI 2 | Bearer 3 | RLC channel 1 |
| | Bearer 4 | RLC channel 1 |

In the foregoing method, the configuration information obtained by the first UE may include the correspondence between the ID information of the first data and RLC channels. In this way, which RLC channel corresponds to the first data can be explicitly determined based on the correspondence, such that the first UE can use the RLC channel to send the first data.

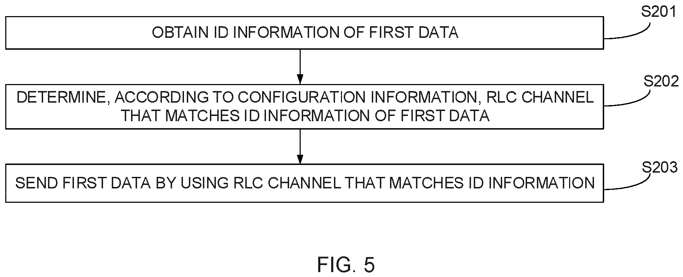

In an embodiment, based on the foregoing embodiments, as illustrated in FIG. 5, S102 may include the following.

S201, obtain the ID information of the first data.

The ID information may be located in a packet header of the first data, or may be located in a specific field in the first data. Alternatively, the ID information of the first data may not be contained in the first data, and is located in other data storage fields corresponding to the first data. For example, the first UE obtains the first data according to a first message, and then obtains the ID information of the first data according to a second message corresponding to the first message; or the UE obtains the first data according to a first field in the first message, and obtains the ID information of the first data according to a second field in the first message, which is not limited herein. When sending the first data, the first UE may extract the ID information from a position corresponding to the ID information of the first data via an adaptation layer or a PDCP layer.

S202, determine, according to the configuration information, an RLC channel that matches the ID information of the first data.

After obtaining the ID information, the first UE may determine, according to the configuration information, the RLC channel that matches the ID information, and take the matched RLC channel as the RLC channel to be used for sending the first data.

S203, send the first data by using the RLC channel that matches the ID information.

In addition, the first UE may map the first data onto the matched RLC channel via an adaptation layer or a PDCP layer, such that after obtaining the first data from the RLC channel, the first UE can segment, re-segment, and retransmit the first data via an RLC layer at the transmitting side, and then send the processed data to a MAC layer on a logical channel. Then the first UE sends the processed data to a PHY layer via the MAC layer, and then performs lower-layer encoding and decoding on the data via the PHY layer and then sends the first data over an air interface.

In the foregoing method, the first UE can obtain, according to the ID information of the first data, the RLC channel that matches the ID information, so as to explicitly determine which RLC channel corresponds to the first data, such that the first UE can use the RLC channel to send the first data.

The foregoing embodiments mainly introduce the configuration information to be used by the first UE for sending the first data. The following embodiments will describe the configuration information used when the first UE is at different nodes in a relay communication system.

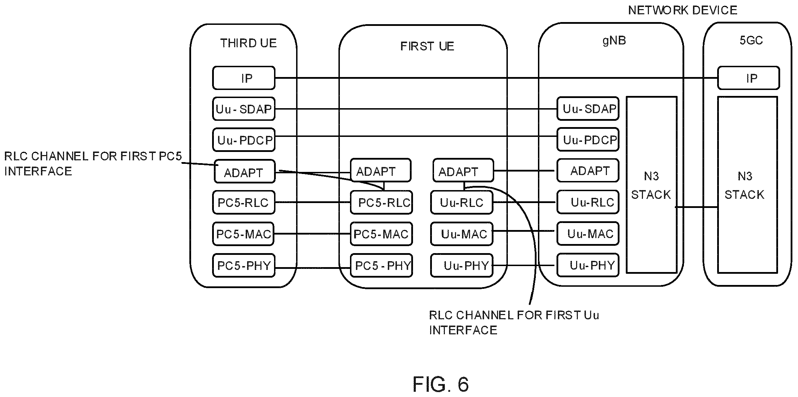

In an embodiment, the first UE is a relay UE between other UEs and the network device. The other UEs may be the third UE, and the first UE may be a relay UE for relay from the network device to the third UE, as illustrated in FIG. 6.

The first data is data which is received from the network device by the first UE and to be sent to the third UE. The configuration information may indicate an RLC channel for a first PC5 interface to be used by the first UE for sending the first data.

The first UE and gNB of the network device have a protocol layer for a Uu interface. For the first data, the receiving side for the first UE is a Uu interface. The procedure of receiving the first data by the first UE may be as follows. After processing the data via a protocol layer for a Uu interface at a network-device side, the network device may send the first data to the first UE via Uu-PHY at the network-device side. After receiving the first data via Uu-PHY, the first UE performs lower-layer decoding on the first data, and then sends the first data to a Uu-MAC layer. After processing the data via the Uu-MAC layer, the first UE transmits the data to a Uu-RLC layer on a logical channel between the Uu-MAC layer and the Uu-RLC layer. Then after processing the data via the Uu-RLC layer, the first UE sends the data to an adaptation layer for the first UE on an RLC channel between the Uu-RLC layer and the adaptation layer for the first UE.

The first UE and the third UE have a protocol layer for a PC5 interface. For the first data, the transmitting side for the first UE is a PC5 interface. The procedure of sending the first data to the third UE by the first UE may be as follows. The first UE may determine, via an adaptation layer, an RLC channel corresponding to the ID information of the first data according to the configuration information, that is, a data transmission channel between the adaptation layer and PC5-RLC for the first UE. After mapping the first data onto the RLC channel via the adaptation layer, the first UE may process the received first data via the PC5-RLC layer and then send the first data to a PC5-MAC layer. Then the first UE sends the processed data to a PC5-PHY layer via the PC5-MAC layer. After performing encoding and decoding on the first data via the PC5-PHY layer, the first UE sends the first data the third UE over an air interface. After processing the first data via a PC5-PHY layer, the third UE processes the first data sequentially via a PC5-MAC layer and a PC5-RLC layer for the third UE.

The ID related to the RLC channel to be used for receiving the first data in the ID information may be an ID related to an RLC channel for a first Uu interface to be used by the first UE for receiving the first data.

The device ID in the ID information may include the device ID of the third UE. The device ID of the third UE may include at least one of the following of the third UE: a 5G-S-TMSI, an I-RNTI, an L2 ID, an ID to be used at the adaptation layer for the first UE, or sequence information in an SUI message.

The ID of the bearer carrying the first data in the ID information is an ID of a Uu bearer for the first data.

In the configuration information for the first UE, the ID information may include at least one of: the ID related to the RLC channel for the first Uu interface to be used by the first UE for receiving the first data, the device ID of the third UE, or the ID of the Uu bearer for the first data.

In the foregoing method, a scheme for configuring an RLC channel for the first UE for relay from the network device to the third UE in a relay communication system is provided.

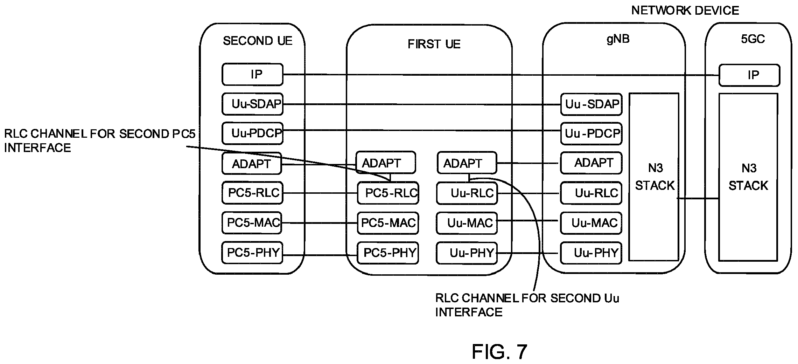

In an embodiment, the first UE is a relay UE between other UEs and the network device. The other UEs may be the second UE, and the first UE may be a relay UE for relay from the second UE to the network device, as illustrated in FIG. 7.

The first data is data which is received from the second UE by the first UE and to be sent to the network device. The configuration information indicates an RLC channel for a second Uu interface to be used by the first UE for sending the first data to the network device.

The first UE and the second UE have a protocol layer for a PC5 interface. For the first data, the receiving side for the first UE is a PC5 interface. A procedure of sending the first data to the first UE by the second UE may be as follows. The second UE may determine, via an adaptation layer, an RLC channel for the first data at a transmitting side for the second UE according to the configuration information, that is, a data transmission channel between the adaptation layer and a PC5-RLC layer for the second UE. After mapping the first data onto the RLC channel via the adaptation layer, the second UE may process the received first data via the PC5-RLC layer, then process the first data sequentially via a PC5-MAC layer and a PC5-PHY layer for the second UE, and then send the first data to the first UE over an air interface. After processing the first data via a PC5-PHY layer, the first UE processes the first data sequentially via a PC5-MAC layer and a PC5-RLC layer for the first UE, and then transmits the first data to an adaptation layer.

The first UE and gNB of the network device have a protocol layer for a Uu interface. For the first data, the transmitting side for the first UE is a Uu interface. A procedure of sending the first data to the network device by the first UE may be as follows. The first UE may determine, via an adaptation layer, an RLC channel corresponding to the ID information of the first data according to the configuration information, that is, a data transmission channel between the adaptation layer and a Uu-RLC for the first UE. After mapping the first data onto the Uu RLC channel via the adaptation layer, the first UE may process the received first data via the Uu-RLC layer and send the processed first data to a Uu-MAC layer. Then the first UE sends the processed first data to a Uu-PHY layer via the Uu-MAC layer, then performs encoding and decoding on the first data via the Uu-PHY layer, and then sends the first data to the network device over an air interface. After processing the first data via a Uu-PHY layer, the network device may process the first data sequentially via a Uu-MAC layer and a Uu-RLC layer for the network device.

The ID related to the RLC channel to be used for receiving the first data in the ID information is an ID related to an RLC channel for a second PC5 interface to be used by the first UE for receiving the first data.

The device ID in the ID information includes the device ID of the second UE. The device ID of the second UE may include at least one of the following of the second UE: a 5G-S-TMSI, an I-RNTI, an L2 ID, an ID to be used at the adaptation layer for the first UE, and sequence information in an SUI message.

The ID of the bearer carrying the first data in the ID information is an ID of a Uu bearer for the first data.

In the configuration information for the first UE, the ID information may include at least one of: the ID related to the RLC channel for the second PC5 interface to be used by the first UE for receiving the first data, the device ID of the second UE, or the ID of the Uu bearer for the first data.

In the foregoing method, a scheme for configuring an RLC channel for the first UE for relay from the second UE to the network device in a relay communication system is provided.

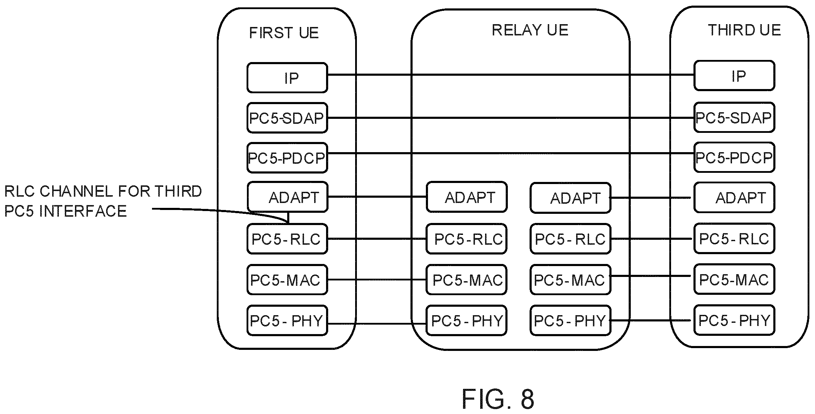

In an embodiment, the first UE may be a UE for communicating with the third UE through relay of a relay UE, as illustrated in FIG. 8.

The first data may be data to be sent to the third UE which is of the first UE itself, or is received from the network device by the first UE, or is received from the second UE by the first UE. The configuration information may indicate an RLC channel for a third PC5 interface to be used by the first UE for sending the first data to the relay UE.

The first UE and the relay UE have a protocol layer for a PC5 interface. For the first data, the receiving side for the first UE is a PC5 interface. The first data may be data of the first UE itself, or may be data received from the network device by the first UE, or may be data received from the second UE, which is not limited herein. The first data is exemplarily data of the first UE itself, and a procedure of sending the first data to the third UE by the first UE may be as follows. The first UE may determine, via an adaptation layer, an RLC channel corresponding to the ID information of the first data according to the configuration information, that is, a data transmission channel between the adaptation layer and a PC5-RLC at the transmitting side for the first UE. After mapping the first data onto the RLC channel via the adaptation layer, the first UE may process the received first data via the PC5-RLC layer at the transmitting side, then process the first data sequentially via a PC5-MAC layer and a PC5-PHY layer at the transmitting side for the first UE, and then send the processed first data to the relay UE over an air interface. After processing the first data via a PC5-PHY layer at a receiving side, the relay UE processes the first data sequentially via a PC5-MAC layer and a PC5-RLC layer at the receiving side for the relay UE, and then transmits the first data to an adaptation layer.

The relay UE and the third UE have a protocol layer for a PC5 interface. The relay UE may determine, via an adaptation layer, an RLC channel corresponding to the ID information of the first data according to the configuration information, that is, a data transmission channel between the adaptation layer and a PC5-RLC at a transmitting side for the relay UE. After mapping the first data onto the RLC channel via the adaptation layer, the relay UE may process the received first data via the PC5-RLC layer at the transmitting side, then process the first data sequentially via a PC5-MAC layer and a PC5-PHY layer at the transmitting side for the relay UE, and then send the first data to the third UE over an air interface. After processing the first data via a PC5-PHY layer at a receiving side, the third UE processes the first data sequentially via a PC5-MAC layer and a PC5-RLC layer at the receiving side for the third UE, and then transmits the first data to an adaptation layer.

The ID of the bearer carrying the first data in the ID information may be an ID of a PC5 bearer for the first data.

The device ID in the ID information may include the device ID of the third UE. The device ID of the third UE may include at least one of the following of the third UE: a 5G-S-TMSI, an I-RNTI, an L2 ID, an ID to be used at an adaptation layer for the first UE, or sequence information in an SUI message.

In the configuration information for the first UE, the ID information may include at least one of: the device ID of the third UE or the ID of the PC5 bearer for the first data.

In the foregoing method, a scheme for configuring an RLC channel for the first UE for communicating with the third UE via a relay UE in a relay communication system is provided.

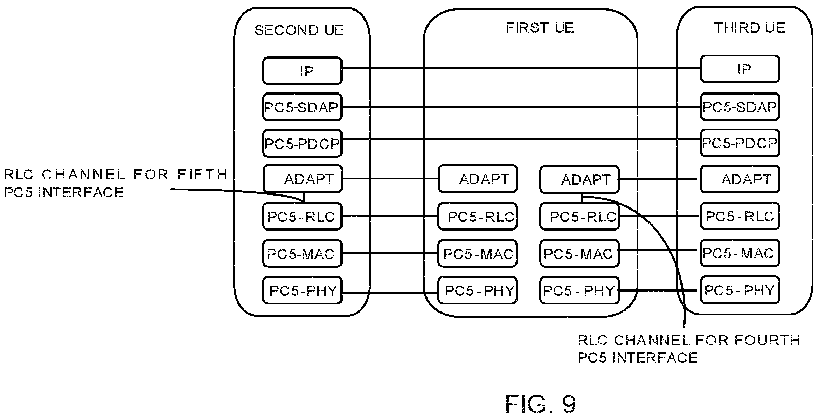

In an embodiment, the first UE is a relay UE for relay from the second UE to the third UE, as illustrated in FIG. 9.

The first data is data which is of the first UE itself and to be sent to the third UE or is obtained from the second UE and to be sent to the third UE. The configuration information may indicate an RLC channel for a fourth PC5 interface to be used by the first UE for sending the first data to the third UE.

The first data is exemplarily data obtained from the second UE by the first UE. The first UE and the second UE have a protocol layer for a PC5 interface. For the first data, the receiving side for the first UE is a PC5 interface. A procedure of receiving the first data from the second UE by the first UE may be as follows. The second UE sends the first data to the first UE over an air interface. After processing the first data via a PC5-PHY layer, the first UE processes the first data sequentially via a PC5-MAC layer and a PC5-RLC layer for the first UE, and then transmits the first data to an adaptation layer.

The first UE and the third UE have a protocol layer for a PC5 interface. The first UE may determine, via an adaptation layer, an RLC channel corresponding to the ID information of the first data according to the configuration information, that is, a data transmission channel between the adaptation layer and a PC5-RLC at the transmitting side for the first UE. After mapping the first data onto the RLC channel via the adaptation layer, the first UE may process the received first data via the PC5-RLC layer at the transmitting side, then process the first data sequentially via a PC5-MAC layer and a PC5-PHY layer at the transmitting side for the first UE, and then send the first data to the third UE over an air interface. After processing the first data via a PC5-PHY layer at a receiving side,the third UE may process the first data sequentially via a PC5-MAC layer and a PC5-RLC layer at the receiving side for the third UE, and then transmit the first data to an adaptation layer.

The ID of the bearer carrying the first data in the ID information may be an ID of a PC5 bearer for the first data.

The ID related to the RLC channel to be used for receiving the first data in the ID information may be an ID related to an RLC channel for a fifth PC5 interface to be used by the relay UE for obtaining the first data from the second UE.

The device ID in the ID information includes the device ID of the second UE and the device ID of the third UE. The device ID of the third UE may include at least one of the following of the third UE: a 5G-S-TMSI, an I-RNTI, an L2 ID, an ID to be used at the adaptation layer for the first UE, or sequence information in an SUI message. The device ID of the second UE may include at least one of the following of the second UE: a 5G-S-TMSI, an I-RNTI, an L2 ID, an ID to be used at the adaptation layer for the first UE, or sequence information in an SUI message.

In the configuration information for the first UE, the ID information may include at least one of: the ID related to the RLC channel for the fifth PC5 interface to be used by the first UE for receiving the first data, the device ID of the second UE, the device ID of the third UE, or the ID of the PC5 bearer for the first data.

In the foregoing method, a scheme for configuring an RLC channel for the first UE for relay from the second UE to the third UE in a relay communication system is provided.

It should be understood that, although the steps in the flowcharts of FIG. 3 to FIG. 4 are displayed in a sequence as indicated by the arrows, the steps are not necessarily performed in the sequence as indicated by the arrows. Unless otherwise specified herein, there is no limitation on the execution order of the steps, and the steps may be performed in other orders. In addition, at least some of the steps in FIG. 3 to FIG. 4 may include multiple sub-steps or stages. These sub-steps or stages are not necessarily performed at the same time, and instead, they may be performed at different moments. These sub-steps or stages are not necessarily performed sequentially, and instead, they may be performed in turn or alternately with at least some of other steps or sub-steps or stages of the other steps.

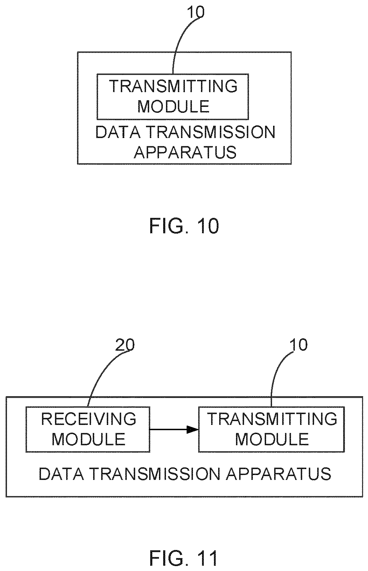

In an embodiment, a data transmission apparatus is provided. As illustrated in FIG. 10, the apparatus includes a transmitting module 10. The transmitting module 10 is configured to send first data according to configuration information, where the first data includes data to be sent to a third UE which is of the first UE itself, or is received from a network device by the first UE, or is received from a second UE by the first UE, and/or data to be sent to the network device which is received from the second UE by the first UE; the configuration information indicates an RLC channel to be used by the first UE for sending the first data.

In an embodiment, based on the foregoing embodiments, the configuration information includes a correspondence between RLC channels and ID information of the first data.

In an embodiment, based on the foregoing embodiments, the ID information of the first data includes a device ID of the second UE and/or a device ID of the third UE.

In an embodiment, based on the foregoing embodiments, the device ID includes at least one of the following of a UE: a 5G-S-TMSI, an I-RNTI, an L2 ID, an ID to be used at an adaptation layer for the first UE, or sequence information in an SUI message.

In an embodiment, based on the foregoing embodiments, the ID information of the first data includes an ID of a bearer carrying the first data.

In an embodiment, based on the foregoing embodiments, the ID information of the first data includes an ID related to an RLC channel to be used by the first UE for receiving the first data.

In an embodiment, based on the foregoing embodiments, the ID related to the RLC channel to be used for receiving the first data includes at least one of: an ID of an RLC bearer to be used for receiving the first data, or an LCID corresponding to the RLC channel to be used for receiving the first data.

In an embodiment, based on the foregoing embodiments, the first UE is a relay UE between other UEs and the network device.

In an embodiment, based on the foregoing embodiments, the first UE is a relay UE for relay from the network device to the third UE, the first data is data which is received from the network device by the first UE and to be sent to the third UE, and the configuration information indicates an RLC channel for a first PC5 interface to be used by the first UE for sending the first data.

In an embodiment, based on the foregoing embodiments, the ID related to the RLC channel to be used for receiving the first data in the ID information is an ID related to an RLC channel for a first Uu interface to be used by the first UE for receiving the first data.

In an embodiment, based on the foregoing embodiments, the device ID in the ID information includes the device ID of the third UE.

In an embodiment, based on the foregoing embodiments, the first UE is a relay UE for relay from the second UE to the network device, the first data is data which is received from the second UE by the first UE and to be sent to the network device, and the configuration information indicates an RLC channel for a second Uu interface to be used by the first UE for sending the first data to the network device.

In an embodiment, based on the foregoing embodiments, the ID related to the RLC channel to be used for receiving the first data in the ID information is an ID related to an RLC channel for a second PC5 interface to be used by the first UE for receiving the first data.

In an embodiment, based on the foregoing embodiments, the device ID in the ID information includes the device ID of the second UE.

In an embodiment, based on the foregoing embodiments, the ID of the bearer carrying the first data in the ID information is an ID of a Uu bearer for the first data.

In an embodiment, based on the foregoing embodiments, the first UE is a UE for communicating with the third UE through relay of a relay UE.

In an embodiment, based on the foregoing embodiments, the first data is data to be sent to the third UE which is of the first UE itself, or is received from the network device by the first UE, or is received from the second UE by the first UE. The configuration information indicates an RLC channel for a third PC5 interface to be used by the first UE for sending the first data to the relay UE.

In an embodiment, based on the foregoing embodiments, the ID of the bearer carrying the first data in the ID information is an ID of a PC5 bearer for the first data.

In an embodiment, based on the foregoing embodiments, the device ID in the ID information includes the device ID of the third UE.

In an embodiment, based on the foregoing embodiments, the first UE is a relay UE for relay from the second UE to the third UE.

In an embodiment, based on the foregoing embodiments, the first data is data which is of the relay UE itself and to be sent to the third UE or is obtained from the second UE and to be sent to the third UE. The configuration information indicates an RLC channel for a fourth PC5 interface to be used by the first UE for sending the first data to the third UE.

In an embodiment, based on the foregoing embodiments, the ID of the bearer carrying the first data in the ID information is an ID of a PC5 bearer for the first data.

In an embodiment, based on the foregoing embodiments, the ID related to the RLC channel to be used for receiving the first data in the ID information is an ID related to an RLC channel for a fifth PC5 interface to be used by the relay UE for obtaining the first data from the second UE.

In an embodiment, based on the foregoing embodiments, the device ID in the ID information includes the device ID of the second UE and the device ID of the third UE.

In an embodiment, based on the foregoing embodiments, as illustrated in FIG. 11, the apparatus further includes a receiving module 20. The receiving module 20 is configured to receive the configuration information sent by the network device.

In an embodiment, based on the foregoing embodiments, if the bearer carrying the first data is SRB0 and/or SRB1, the configuration information is configuration information predefined in a protocol.

In an embodiment, based on the foregoing embodiments, if the bearer carrying the first data is SRB2 or a DRB, the configuration information is information received from the network device by the first UE.

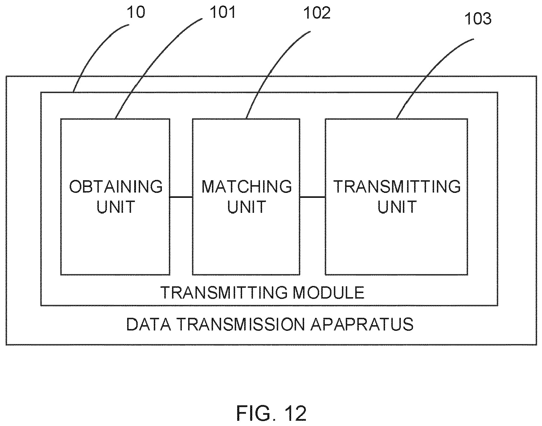

In an embodiment, based on the foregoing embodiments, as illustrated in FIG. 12, the transmitting module 10 includes an obtaining unit 101, a matching unit 102, and a transmitting unit 103. The obtaining unit 101 is configured to obtain the ID information of the first data. The matching unit 102 is configured to determine, according to the configuration information, an RLC channel that matches the ID information of the first data. The transmitting unit 103 is configured to send the first data by using the RLC channel that matches the ID information.

The implementation principle and technical effect of the data transmission apparatus provided in the foregoing embodiments are similar to those of the foregoing method embodiments, which will not be described again herein.

The division of various modules in the data transmission apparatus is only intended for illustration. In other embodiments, the data transmission apparatus may be divided into different modules as required to complete all or some of functions of the data transmission apparatus.

For the limitation on the data transmission apparatus, reference can be made to the foregoing limitation on the data transmission method, which will not be described again herein. All or some of the modules in the data transmission apparatus may be implemented by software, hardware, or a combination thereof. The modules each may be embedded in or independent of a processor in a computer device in the form of hardware; or may be stored in a memory in the computer device in the form of software, so that the processor can invoke the modules to execute operations corresponding to the modules.

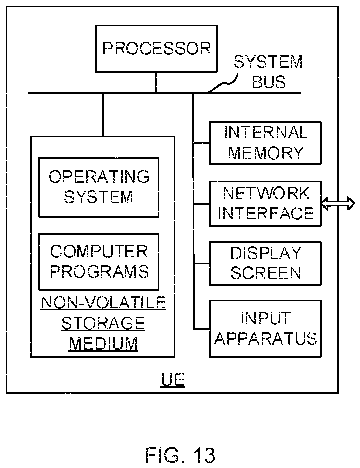

In an embodiment, a UE is provided. The internal structure of the UE may be that as illustrated in FIG. 13. The UE includes a processor, a memory, a network interface, a display screen, and an input apparatus which are connected together via a system bus. The processor of the UE is configured to provide computing and control capabilities. The memory of the UE includes a non-volatile storage medium and an internal memory, where the non-volatile storage medium is configured to store an operating system and computer programs, and the internal memory provides an environment for running the operating system and the computer programs in the non-volatile storage medium. The network interface of the UE is configured to communicate with an external UE through network connection. The computer programs, when executed by the processor, are operable to implement a data transmission method. The display screen of the UE may be a liquid crystal display or an electronic ink display. The input apparatus of the UE may be a touch layer covered on the display screen; or may be a key, a trackball, or a touch control panel arranged on a housing of the UE; or may be an external keyboard, a touch control panel, or a mouse, etc.

Those skilled in the art can understand that, the structure illustrated in FIG. 13 is only the part of structure related to the solutions of the disclosure, and does not limit the network device or terminal to which the solutions of the disclosure are applied. The network device or terminal may include more or fewer components than those illustrated in the figure, or some components may be combined, or may have different component arrangements.

The implementation of each module in the apparatus provided in the embodiments of the disclosure may be in the form of a computer program. The computer program may be run on a terminal or a server. A program module formed by the computer program may be stored in a memory of the terminal or the server. The computer program, when executed by the processor, is operable to implement the steps of the method described in the embodiments of the disclosure.

In an embodiment, a UE is provided. The UE includes a transmitter, a memory, and a processor. The memory is configured to store computer programs. The transmitter is configured to send first data according to configuration information in cooperation with the processor. The first data includes data to be sent to a third UE which is of the first UE itself, or is received from a network device by the first UE, or is received from a second UE by the first UE, and/or data to be sent to the network device which is received from the second UE by the first UE. The configuration information indicates an RLC channel to be used by the first UE for sending the first data.

The implementation principle and technical effect of the UE provided in the foregoing embodiment are similar to those of the foregoing method embodiments, which will not be described again herein.

Embodiments of the disclosure further provide a computer-readable storage medium, which is one or more non-volatile computer-readable storage media including computer-executable instructions. The computer-executable instructions, when executed by one or more processors, are operable with the processors to implement the steps of the data transmission method.

The implementation principle and technical effect of the computer-readable storage medium provided in the foregoing embodiments are similar to those of the foregoing method embodiments, which will not be described again herein.

A computer program product includes instructions which, when executed by a computer, are operable with the computer to implement the data transmission method.

Any reference to memory, storage, database, or other media used in the disclosure may include a nonvolatile memory and/or a volatile memory. The non-volatile memory may include a read only memory (ROM), a programmable ROM (PROM), an electrically PROM (EPROM), an electrically erasable PROM (EEPROM), or a flash memory. The volatile memory may include a random access memory (RAM) that acts as an external cache. By way of illustration rather than limitation, the RAM is available in various forms, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a rambus direct RAM (RDRAM), a direct rambus DRAM (DRDRAM), and a rambus DRAM (RDRAM).

The foregoing embodiments merely represent several implementations of the disclosure and are described in detail, but shall not be comprehended as limitation on the scope of the disclosure. It should be noted that, for those skilled in the art, various modifications and improvements can be made without departing from the concept of the disclosure, and all these modifications and improvements belong to the protection scope of the disclosure. Therefore, the protection scope of the disclosure should be subject to the appended claims.

## Claims

1. A data transmission method, comprising:
sending, by a first user equipment (UE), first data according to configuration information, wherein the first data comprises data to be sent to a third UE which is of the first UE itself, or is received from a network device by the first UE, or is received from a second UE by the first UE, and/or data to be sent to the network device which is received from the second UE by the first UE, and wherein
the configuration information indicates a radio link control (RLC) channel to be used by the first UE for sending the first data.

2. The method of claim 1, wherein the configuration information comprises a correspondence between RLC channels and identity (ID) information of the first data.

3. The method of claim 2, wherein the ID information of the first data comprises a device ID of the second UE and/or a device ID of the third UE.

4. The method of claim 3, wherein the device ID comprises at least one of the following of a UE: a 5^{th} generation system architecture evolution temporary mobile subscriber identity (5G-S-TMSI), an inactive radio network temporary identifier (I-RNTI), a layer 2 identifier (L2 ID), an ID to be used at an adaptation layer for the first UE, or sequence information in a sidelink UE information (SUI) message.

5. The method of claim 2, wherein the ID information of the first data comprises an ID of a bearer carrying the first data.

6. The method of claim 2, wherein the ID information of the first data comprises an ID related to an RLC channel to be used by the first UE for receiving the first data.

7. The method of claim 6, wherein the ID related to the RLC channel to be used for receiving the first data comprises at least one of: an ID of an RLC bearer to be used for receiving the first data, or a logical channel identifier (LCID) corresponding to the RLC channel to be used for receiving the first data.

8. The method of any of claims 2 to 7, wherein the first UE is a relay UE between other UEs and the network device.

9. The method of claim 8, wherein the first UE is a relay UE for relay from the network device to the third UE, the first data is data which is received from the network device by the first UE and to be sent to the third UE, and the configuration information indicates an RLC channel for a first proximity based service (ProSe) communication interface (PC5 interface) to be used by the first UE for sending the first data.

10. The method of claim 9, wherein the ID related to the RLC channel to be used for receiving the first data in the ID information is an ID related to an RLC channel for a first UE-universal mobile telecommunication system (UMTS) terrestrial radio access network (UE-UTRAN, Uu) interface to be used by the first UE for receiving the first data.

11. The method of claim 9, wherein the device ID in the ID information comprises the device ID of the third UE.

12. The method of claim 8, wherein the first UE is a relay UE for relay from the second UE to the network device, the first data is data which is received from the second UE by the first UE and to be sent to the network device, and the configuration information indicates an RLC channel for a second Uu interface to be used by the first UE for sending the first data to the network device.

13. The method of claim 12, wherein the ID related to the RLC channel to be used for receiving the first data in the ID information is an ID related to an RLC channel for a second PC5 interface to be used by the first UE for receiving the first data.

14. The method of claim 12, wherein the device ID in the ID information comprises the device ID of the second UE.

15. The method of claim 8, wherein the ID of the bearer carrying the first data in the ID information is an ID of a Uu bearer for the first data.

16. The method of any of claims 2 to 5, wherein the first UE is a UE for communicating with the third UE through relay of a relay UE.

17. The method of claim 16, wherein the first data is data to be sent to the third UE which is of the first UE itself, or is received from the network device by the first UE, or is received from the second UE by the first UE, and the configuration information indicates an RLC channel for a third PC5 interface to be used by the first UE for sending the first data to the relay UE.

18. The method of claim 17, wherein the ID of the bearer carrying the first data in the ID information is an ID of a PC5 bearer for the first data.

19. The method of claim 17, wherein the device ID in the ID information comprises the device ID of the third UE.

20. The method of any of claims 2 to 7, wherein the first UE is a relay UE for relay from the second UE to the third UE.

21. The method of claim 20, wherein the first data is data which is of the relay UE itself and to be sent to the third UE or is obtained from the second UE and to be sent to the third UE, and the configuration information indicates an RLC channel for a fourth PC5 interface to be used by the first UE for sending the first data to the third UE.

22. The method of claim 21, wherein the ID of the bearer carrying the first data in the ID information is an ID of a PC5 bearer for the first data.

23. The method of claim 21, wherein the ID related to the RLC channel to be used for receiving the first data in the ID information is an ID related to an RLC channel for a fifth PC5 interface to be used by the relay UE for obtaining the first data from the second UE.

24. The method of claim 21, wherein the device ID in the ID information comprises the device ID of the second UE and the device ID of the third UE.

25. The method of any of claims 1 to 24, further comprising:
receiving, by the first UE, the configuration information sent by the network device.

26. The method of any of claims 1 to 24, wherein when the bearer carrying the first data is signaling radio bearer 0 (SRB0) and/or SRB1, the configuration information is configuration information predefined in a protocol.

27. The method of any of claims 1 to 24, wherein when the bearer carrying the first data is SRB2 or a data radio bearer (DRB), the configuration information is information received from the network device by the first UE.

28. The method of any of claims 2 to 24, wherein sending the first data according to the configuration information comprises:
obtaining the ID information of the first data;
determining, according to the configuration information, an RLC channel that matches the ID information of the first data; and
sending the first data by using the RLC channel that matches the ID information.

29. A data transmission apparatus, applied to a first user equipment (UE) and comprising:
a transmitting module configured to send first data according to configuration information, wherein the first data comprises data to be sent to a third UE which is of the first UE itself, or is received from a network device by the first UE, or is received from a second UE by the first UE, and/or data to be sent to the network device which is received from the second UE by the first UE, and wherein
the configuration information indicates a radio link control (RLC) channel to be used by the first UE for sending the first data.

30. The apparatus of claim 29, wherein the configuration information comprises a correspondence between RLC channels and identity (ID) information of the first data.

31. The apparatus of claim 30, wherein the ID information of the first data comprises a device ID of the second UE and/or a device ID of the third UE.

32. The apparatus of claim 31, wherein the device ID comprises at least one of the following of a UE: a 5^{th} generation system architecture evolution temporary mobile subscriber identity (5G-S-TMSI), an inactive radio network temporary identifier (I-RNTI), a layer 2 identifier (L2 ID), an ID to be used at an adaptation layer for the first UE, or sequence information in a sidelink UE information (SUI) message.

33. The apparatus of claim 30, wherein the ID information of the first data comprises an ID of a bearer carrying the first data.

34. The apparatus of claim 30, wherein the ID information of the first data comprises an ID related to an RLC channel to be used by the first UE for receiving the first data.

35. The apparatus of claim 34, wherein the ID related to the RLC channel to be used for receiving the first data comprises at least one of: an ID of an RLC bearer to be used for receiving the first data, or a logical channel identifier (LCID) corresponding to the RLC channel to be used for receiving the first data.

36. The apparatus of any of claims 30 to 35, wherein the first UE is a relay UE between other UEs and the network device.

37. The apparatus of claim 36, wherein the first UE is a relay UE for relay from the network device to the third UE, the first data is data which is received from the network device by the first UE and to be sent to the third UE, and the configuration information indicates an RLC channel for a first proximity based service (ProSe) communication interface (PC5 interface) to be used by the first UE for sending the first data.

38. The apparatus of claim 37, wherein the ID related to the RLC channel to be used for receiving the first data in the ID information is an ID related to an RLC channel for a first UE-universal mobile telecommunication system (UMTS) terrestrial radio access network (UE-UTRAN, Uu) interface to be used by the first UE for receiving the first data.

39. The apparatus of claim 37, wherein the device ID in the ID information comprises the device ID of the third UE.

40. The apparatus of claim 36, wherein the first UE is a relay UE for relay from the second UE to the network device, the first data is data which is received from the second UE by the first UE and to be sent to the network device, and the configuration information indicates an RLC channel for a second Uu interface to be used by the first UE for sending the first data to the network device.

41. The apparatus of claim 40, wherein the ID related to the RLC channel to be used for receiving the first data in the ID information is an ID related to an RLC channel for a second PC5 interface to be used by the first UE for receiving the first data.

42. The apparatus of claim 40, wherein the device ID in the ID information comprises the device ID of the second UE.

43. The apparatus of claim 36, wherein the ID of the bearer carrying the first data in the ID information is an ID of a Uu bearer for the first data.

44. The apparatus of any of claims 30 to 33, wherein the first UE is a UE for communicating with the third UE through relay of a relay UE.

45. The apparatus of claim 44, wherein the first data is data to be sent to the third UE which is of the first UE itself, or is received from the network device by the first UE, or is received from the second UE by the first UE, and the configuration information indicates an RLC channel for a third PC5 interface to be used by the first UE for sending the first data to the relay UE.

46. The device of claim 45, wherein the ID of the bearer carrying the first data in the ID information is an ID of a PC5 bearer for the first data.

47. The apparatus of claim 45, wherein the device ID in the ID information comprises the device ID of the third UE.

48. The apparatus of any of claims 30 to 35, wherein the first UE is a relay UE for relay from the second UE to the third UE.

49. The apparatus of claim 48, wherein the first data is data which is of the relay UE itself and to be sent to the third UE or is obtained from the second UE and to be sent to the third UE, and the configuration information indicates an RLC channel for a fourth PC5 interface to be used by the first UE for sending the first data to the third UE.

50. The apparatus of claim 49, wherein the ID of the bearer carrying the first data in the ID information is an ID of a PC5 bearer for the first data.

51. The apparatus of claim 49, wherein the ID related to the RLC channel to be used for receiving the first data in the ID information is an ID related to an RLC channel for a fifth PC5 interface to be used by the relay UE for obtaining the first data from the second UE.

52. The apparatus of claim 49, wherein the device ID in the ID information comprises the device ID of the second UE and the device ID of the third UE.

53. The apparatus of any of claims 29 to 52, further comprising:
a receiving module configured to receive the configuration information sent by the network device.

54. The apparatus of any of claims 29 to 52, wherein when the bearer carrying the first data is signaling radio bearer 0 (SRB0) and/or SRB1, the configuration information is configuration information predefined in a protocol.

55. The apparatus of any of claims 29 to 52, wherein when the bearer carrying the first data is SRB2 or a data radio bearer (DRB), the configuration information is information received from the network device by the first UE.

56. The apparatus of any of claims 30-52, wherein the transmitting module comprises:
an obtaining unit configured to obtain the ID information of the first data;
a matching unit configured to determine, according to the configuration information, an RLC channel that matches the ID information of the first data; and
a transmitting unit configured to send the first data by using the RLC channel that matches the ID information.

57. A user equipment (UE), comprising a transceiver, a memory and a processor, wherein the memory is configured to store computer programs, and the processor is configured to execute the computer programs in cooperation with the transceiver, to implement the steps of the method of any of claims 1 to 28.

58. A computer-readable storage medium configured to store computer programs which, when executed by a processor, are operable to implement the steps of the method of any of claims 1 to 28.
